# EUROPÄISCHE PATENTSCHRIFT

(11) **EP 3 414 150 B1**
(45) Veröffentlichungstag und Bekanntmachung des Hinweises auf die Patenterteilung: **25.03.2020**
(21) Anmeldenummer: 18719787.6
(22) Anmeldetag: 13.04.2018
(51) Int. Cl.: B62J 17/08

(54) **COCKPIT-ANORDNUNG FÜR EIN ZWEIRAD**
DASHBOARD-ARRANGEMNT FOR TWO-WHEELER
ASSEMBLAGE D'UN TABLEAU DE BORD POUR CYCLE À DEUX ROUES

(30) Priorität: 15.04.2017 DE 102017003688
(43) Veröffentlichungstag der Anmeldung: 19.12.2018
(73) Patentinhaber: Audi AG, 85045 Ingolstadt (DE)
(72) Erfinder: ROSSETTI, Mario, 74861 Neudenau (DE)
(86) Internationale Anmeldenummer: PCT/EP2018/059496
(87) Internationale Veröffentlichungsnummer: WO 2018/189358

(56) Entgegenhaltungen:
- US-A1- 2011 139 535

## Beschreibung

Die Erfindung betrifft eine Cockpit-Anordnung für ein Zweirad, mit einem Grundkörper, an dem eine Anzeige und eine Lenkhandhabe angebracht sind.

Derartige Cockpits für Zweiräder sind aus dem allgemeinen Stand der Technik bekannt. Meist sind diese Cockpits, insbesondere im Hinblick auf die Positionierung der Lenkhandhabe, nur für eine bestimmte Personengruppe geeignet, während andere Personen, insbesondere kleinere oder größere Personen, die Lenkhandhabe nur in einer für sie nicht geeigneten Position auf dem Zweirad korrekt greifen können. Auch das Ablesen einer Anzeige auf dem Cockpit ist häufig nur bedingt möglich. Dies ist für diese Personen nicht nur eine Unbequemlichkeit, sondern kann in bestimmten Fahrsituationen sogar zu Verkehrsgefährdungen führen.

Aus der US 2016/0137254 A1 ist ein Cockpit für ein Zweirad bekannt, das an einer Lenksäule angebracht ist. Die Lenksäule weist ein Scharnier auf, so dass dieselbe umgeklappt werden kann. Auf diese Weise kann das gesamte Zweirad zum Zwecke eines Transports zusammengefaltet werden.

Die US 2011/0139535 A1, welche die Merkmale der Präambel von Anspruch 1 zeigt, beschreibt ein Cockpit für ein vierrädriges Fahrzeug, das an einer Lenksäule um eine horizontale Achse drehbar gelagert ist.

Ein weiteres Cockpit für ein Zweirad ist in der DE 101 56 725 A1 beschrieben. Dabei ist ein Lenker einteilig mit dem Cockpit ausgeführt.

Aus der US 4,947,955 ist ein Fahrzeug bekannt, das ein mittels eines Gelenks mit einer Lenksäule verbundenes Cockpit aufweist.

Die EP 2 106 993 B1 beschreibt ein zusammenklappbares Zweirad, dessen Lenksäule in der Höhe verstellt werden kann.

Es ist Aufgabe der vorliegenden Erfindung, eine Cockpit-Anordnung für ein Zweirad zu schaffen, das für eine wesentlich größere Anzahl an Nutzern des Zweirads geeignet ist als die bekannten Lösungen.

Erfindungsgemäß wird diese Aufgabe durch die in Anspruch 1 genannten Merkmale gelöst.

Durch die erfindungsgemäße drehbare Anordnung des Grundkörpers an der Karosserie des Zweirads ist eine sehr einfache Anpassung der Position des Cockpits an den jeweiligen Wunsch des Benutzers möglich. Dadurch kann dieser nicht nur die Lenkhandhabe einfacher greifen, sondern auch die an dem Grundkörper angebrachte Anzeige in eine Position bringen, in der sie für ihn leichter ablesbar ist. Auf diese Weise wird nicht nur der Komfort für den Nutzer erhöht, sondern auch die Sicherheit beim Betrieb des Zweirads. Die Erfindung ist dadurch besonders einfach zu realisieren, dass der Grundkörper an einer wenigstens annähernd horizontal verlaufenden Drehachse mit der Karosserie verbunden ist.

Des Weiteren kann in einer Ausgestaltung der Erfindung vorgesehen sein, dass der Grundkörper in wenigstens zwei Positionen gegenüber der Karosserie verriegelbar ist. Dies ermöglicht ein sicheres Befestigen des Grundkörpers und damit des gesamten Cockpits an der Karosserie.

Eine besonders einfache Befestigung bzw. Verriegelung des Cockpits ist möglich, wenn der Grundkörper mittels eines Schnellspanners gegenüber der Karosserie verriegelbar ist.

Zusätzlich oder alternativ kann auch vorgesehen sein, dass der Grundkörper in definierten Raststellungen gegenüber der Karosserie anordenbar ist. Dadurch kann sich eine einfachere Verstellung des Cockpits ergeben.

Eine weitere vorteilhafte Ausgestaltung der Erfindung kann darin bestehen, dass der Grundkörper als Rahmen ausgebildet ist, der die Anzeige zumindest teilweise umgibt. Auf diese Weise kann die Verstellbarkeit des Cockpits sehr einfach von der funktionalen Ausgestaltung der Anzeige getrennt werden.

Um eine einfache Bedienung des mit dem erfindungsgemäßen Cockpit ausgestatteten Zweirads zu ermöglichen, kann des Weiteren vorgesehen sein, dass die Lenkhandhabe mehrere Bedienelemente aufweist.

Dabei ist es besonders vorteilhaft, wenn die Bedienelemente einen Gasgriff, einen Bremshebel und/oder eine Blinkerbetätigung umfassen.

Weitere vorteilhafte Ausgestaltungen und Weiterbildungen der Erfindung ergeben sich aus den restlichen Unteransprüchen. Nachfolgend ist ein Ausführungsbeispiel der Erfindung anhand der Zeichnung prinzipmäßig dargestellt.

Es zeigt:
- Fig. 1: eine perspektivische Ansicht eines Zweirads mit einem Dachelement in einer ersten Position;
- Fig. 2: eine Seitenansicht des Zweirads aus Fig. 1 mit dem Dachelement in einer Zwischenstellung;
- Fig. 3: das Zweirad aus Fig. 2 mit dem Dachelement in einer zweiten Position;
- Fig. 4: eine Draufsicht auf das Zweirad gemäß der Figuren 1 bis 3;
- Fig. 5: eine Draufsicht gemäß Fig. 4 mit einem Abdeckelement in einer anderen Position;
- Fig. 6: eine Seitenansicht eines Fahrersitzes des Zweirads;
- Fig. 7: eine Ansicht gemäß dem Pfeil VII aus Fig. 6;
- Fig. 8: eine perspektivische Ansicht eines erfindungsgemäßen Cockpits des Zweirads in einer ersten Position;
- Fig. 9: eine Ansicht des Cockpits gemäß Fig. 8 in einer zweiten Position; und
- Fig. 10: einen Ständer für das Zweirad.

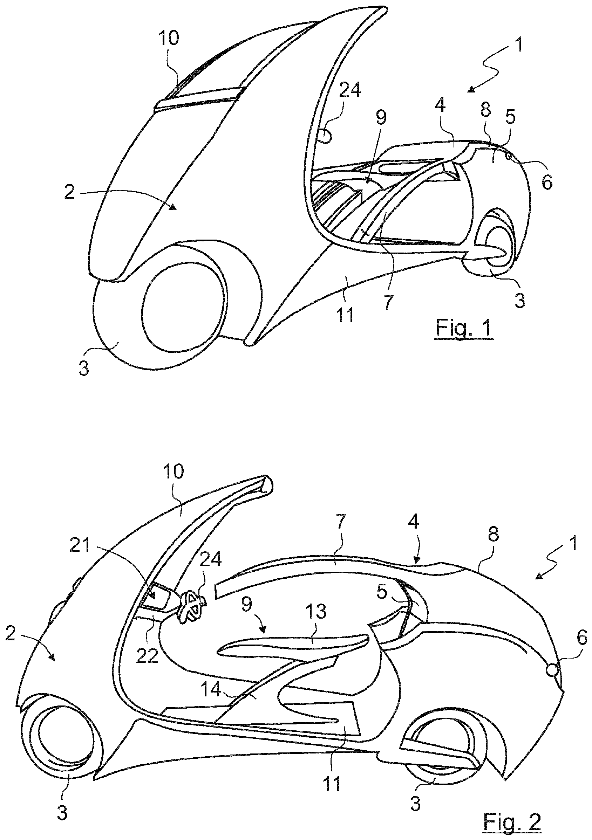

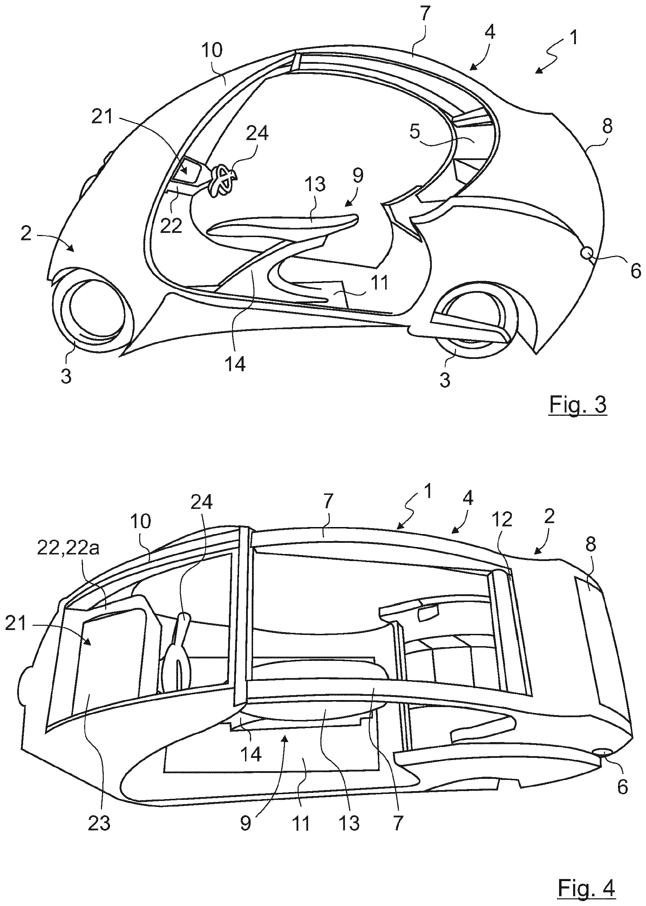

Fig. 1 zeigt ein Zweirad 1, im vorliegenden Fall einen Roller, mit einer Karosserie 2. An der Karosserie 2 sind unter anderem zwei Räder 3 angebracht, wie in den Seitenansichten der Figuren 2 und 3 besser erkennbar ist.

Die Karosserie 2 weist ein Dachelement 4 und ein Ablagefach 5 auf. Wie nachfolgend ausführlich beschrieben, ist das Dachelement 4 um eine Drehachse 6 zwischen wenigstens zwei Positionen drehbar gelagert. Hierbei zeigt Fig. 1 eine erste, untere Position des Dachelements 4, Fig. 2 zeigt eine Zwischenstellung des Dachelements 4und Fig. 3 zeigt eine zweite, obere Position desselben. Die Drehachse 6 ist im vorliegenden Fall in einem hinteren Bereich der Karosserie 2 vorgesehen, was zu einer optimalen Nutzbarkeit des Ablagefachs 5 führt. Die Drehachse 6 des Dachelements 4 gegenüber der Karosserie 2 kann auf an sich bekannte Art und Weise realisiert werden.

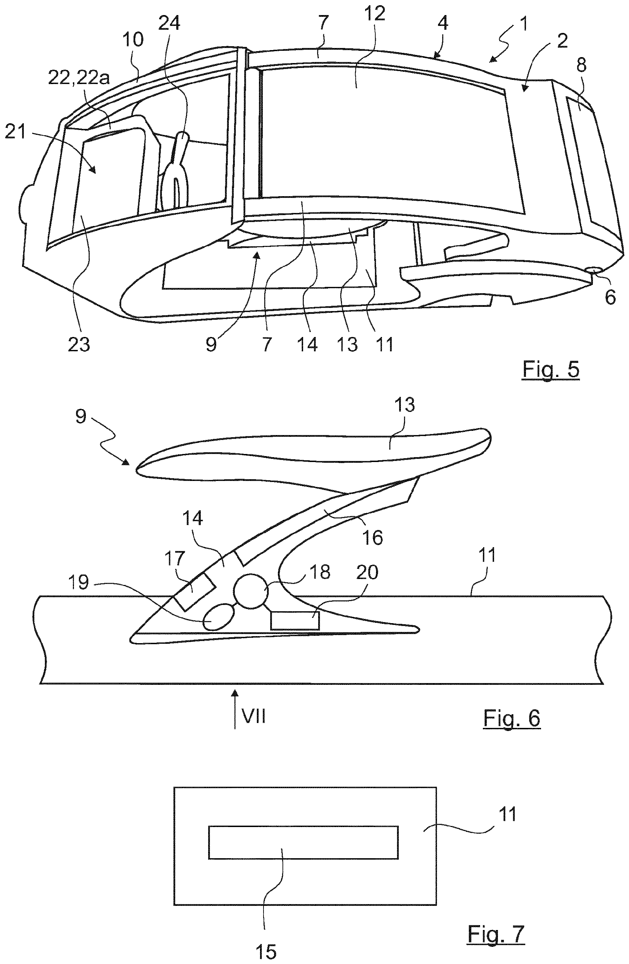

Wie ebenfalls in den Figuren 1 bis 3 sowie in den Draufsichten der Figuren 4 und 5 erkennbar ist, weist das Dachelement 4 zwei parallel zueinander verlaufende Dachholme bzw. Dachstreben 7 auf. Die Dachstreben 7 sind mit einem Deckel 8 für das Ablagefach 5 verbunden bzw. einteilig mit demselben ausgeführt, der ebenfalls Teil des Dachelements 4 ist und mit demselben bewegt wird.

In Fig. 1 ist zu erkennen, dass in der ersten, unteren Position des Dachelements 4 die Dachstreben 7 seitlich eines Fahrersitzes 9 der Karosserie 2 des Zweirads 1 angeordnet sind. In dieser ersten, unteren Position des Dachelements 4 weist das Ablagefach 5 ein verkleinertes Volumen auf und ist mittels des Deckels 8 geschlossen. Dagegen sind in der zweiten, oberen Position des Dachelements 4 die Dachstreben 7 oberhalb des Fahrersitzes 9 angeordnet und das Ablagefach 5 weist ein vergrößertes Volumen auf. Das Volumen des Ablagefachs 5 kann in dieser Position des Dachelements 4 beispielsweise 120 - 150 Liter betragen. In dieser in Fig. 3 dargestellten Position des Dachelements 4 kann ein nicht dargestellter, sich auf dem Fahrersitz 9 befindender Fahrer direkt in das Ablagefach 5 greifen, da dasselbe in dieser Stellung des Dachelements 4 geöffnet ist. Grundsätzlich wäre es denkbar, diese Öffnung des Ablagefachs 5 in Richtung des Fahrers mittels eines Rollos oder einer ähnlichen Trenneinrichtung zu verschließen.

Durch die beschriebene Ausführung des Dachelements 4 kann das Zweirad 1 in der unteren Position des Dachelements 4 wie ein üblicher Roller betrieben werden, der jedoch gegenüber bekannten Rollern durch das Ablagefach 5 ein vergrößertes Transportvolumen aufweist. In der oberen Position des Dachelements 4 ergibt sich für den Fahrer ein Wind- und Wetterschutz sowie ein vergrößertes Transportvolumen durch das noch weiter vergrößerte Volumen des Ablagefachs 5.

Durch die geschwungene Form des Dachelements 4 mit den Dachstreben 7 und dem Deckel 8 ergibt sich dabei insgesamt in beiden Positionen des Dachelements 4 ein sehr harmonisches Gesamtbild der Karosserie 2 und damit des gesamten Zweirads 1.

Das Dachelement 4 kann in seinen beiden Positionen, also in der ersten, unteren Position sowie in der zweiten, oberen Position, verriegelbar sein. Beispielsweise sind im vorliegenden Fall in der oberen Position des Dachelements 4 die Dachstreben 7 mit einem Windschutzscheibenrahmen 10 der Karosserie 2 verbunden und es kann vorgesehen sein, die Dachstreben 7 mit dem Windschutzscheibenrahmen 10 verriegelbar auszuführen. Selbstverständlich kann die Verriegelung der Dachstreben 7 auch in einem anderen Bereich erfolgen. In der unteren Position des Dachelements 4 ist die Verriegelung der Dachstreben 7 mit einer Bodengruppe 11 der Karosserie 2 des Zweirads 1 vorstellbar. Beispielsweise ist es jedoch auch möglich, das Dachelement 4 im Bereich der Drehachse 6 zu verriegeln, was eine Verriegelung des Dachelements 4 in beiden Positionen sowie gegebenenfalls in Zwischenstellungen ermöglichen würde. Auch Kombinationen hiervon sind denkbar.

Der Windschutzscheibenrahmen 10 ist dabei nach relativ weit oben geführt und bietet somit einen guten Wind- und Wetterschutz. Durch die Verbindung des Windschutzscheibenrahmens 10 mit dem Dachelement 4 ergibt sich eine zumindest an der Oberseite vollkommen geschlossene Karosserie 2. In nicht dargestellter Weise können auch in den beiden seitlichen Bereichen der Karosserie 2 entsprechende Abdeckungen, beispielsweise in Form geeigneter Planen bzw. Folien, vorgesehen sein, um einen noch besseren Wetterschutz zu erreichen.

In nicht dargestellter Weise können die Dachstreben 7 so ausgeführt sein, dass sie in das Dachelement 4 eingefahren werden können. Dadurch würden sich die Dachstreben 7 nicht mehr seitlich des Fahrersitzes 9, sondern hinter demselben befinden. Dadurch ergibt sich insbesondere für einen sich auf dem Fahrersitz 9 befindenden Beifahrer verbesserte Platzverhältnisse. In ihrem in das Dachelement 4 eingefahrenen Zustand können die Dachstreben 7 gegebenenfalls auch verriegelt werden.

In den Figuren 4 und 5 ist erkennbar, dass zwischen den Dachstreben 7 ein Abdeckelement 12 vorgesehen ist, das zwischen einer geöffneten Stellung, die in Fig. 4 annähernd erreicht ist, und einer in Fig. 5 dargestellten geschlossenen Stellung verstellt werden kann. Selbstverständlich sind auch Zwischenstellungen des Abdeckelements 12 denkbar. In der Position des Dachelements 4 gemäß Fig. 1 sollte sich das Abdeckelement 12 in seiner geöffneten Position befinden, sodass das Dachelement 4 in seine untere Position gebracht werden kann, ohne dass das Abdeckelement 12 mit dem Fahrer bzw. dem Fahrersitz 9 kollidiert.

Das Abdeckelement 12 kann in einer nicht dargestellten Aufnahme in dem Ablagefach 5 aufnehmbar sein. Dort kann das Abdeckelement 12 beispielsweise aufgerollt bzw. aufgewickelt werden, wenn es aus einem entsprechenden flexiblen Material besteht. Statt als aufwickelbares Abdeckelement 12 kann dasselbe auch aus mehreren Teilen ausgeführt und gegebenenfalls faltbar sein. Grundsätzlich kann das Abdeckelement 12 beispielsweise aus einem geeigneten Kunststoffmaterial bestehen, und zwar je nach Ausführung aus einer Kunststofffolie oder aus einem härteren Kunststoffmaterial.

Gegebenenfalls kann sowohl die Bewegung des Dachelements 4 als auch die Bewegung des Abdeckelements 12 durch einen pneumatischen, hydraulischen oder elektrischen Antrieb erfolgen und gegebenenfalls gesteuert sein. Im Falle einer solchen Steuerung ist es selbstverständlich denkbar, das Abdeckelement 12 in seine geöffnete Stellung zu bringen bevor das Dachelement 4 in seine untere Position gebracht wird. Jedoch ist auch eine rein manuelle Betätigung des Dachelements 4 und/oder des Abdeckelements 12 vorstellbar.

Für den Antrieb des Zweirads 1 kann ein nicht dargestellter Elektromotor als Antriebsquelle vorgesehen sein. Dieser kann beispielsweise in einer Radnabe eines der Räder 3 angeordnet sein. Des Weiteren können in der Bodengruppe 11 der Karosserie 2 diesen Elektromotor mit elektrischem Strom versorgende Batterien bzw. wenigstens eine Batterie angeordnet sein. Dies ist in den Figuren jedoch ebenfalls nicht dargestellt. Gegebenenfalls kann der Antrieb des Zweirads 1 auch durch einen konventionellen Verbrennungsmotor erfolgen. Selbstverständlich sind auch Hybrid-, Plug-in-Hybrid- und andere geeignete Antriebsquellen möglich.

Die Figuren 6 und 7 zeigen den Fahrersitz 9 des Zweirads 1 in einer detaillierteren Darstellung. Der Fahrersitz 9 weist eine im vorliegenden Fall als Doppelsitzbank ausgebildete Sitzfläche 13 und eine Konsole 14 zur Verbindung der Sitzfläche 13 mit der Karosserie 2, im vorliegenden Fall mit der Bodengruppe 11, auf. Hierbei ist die Konsole 14 gegenüber der Karosserie 2 in der mit "x" bezeichneten Längsrichtung des Zweirads 1 verschieblich angeordnet. Die Sitzfläche 13 ist gegenüber der Konsole 14 zumindest in der mit "z" bezeichneten Höhenrichtung des Zweirads 1 verschieblich angeordnet.

Wie in der Ansicht von Fig. 7 erkennbar ist, ist die Konsole 14 in einer Führung 15 der Karosserie 2, im vorliegenden Fall der Bodengruppe 11, geführt. Dabei kann die Konsole 14 stufenlos in der Führung 15 verschieblich und gegenüber der Karosserie 2 verriegelbar sein. Zur Verriegelung der Konsole 14 gegenüber der Führung 15 der Karosserie 2 kann beispielsweise ein nicht dargestellter Schnellspanner vorgesehen sein.

Aus Fig. 6 geht hervor, dass die Sitzfläche 13 in einer Führung 16 in der Konsole 14 geführt ist. Die Führung 16 verläuft dabei kurvenförmig, sodass eine Verstellung der Sitzfläche 13 gegenüber der Konsole 14 in der Höhenrichtung z mit einer Verstellung der Sitzfläche 13 auch in der Horizontalrichtung x einhergeht. Vorzugsweise ist auch die Sitzfläche 13 in der Konsole 14 stufenlos verschiebbar.

Die Führungen 15 und 16 sind in dem dargestellten Ausführungsbeispiel jeweils als Nut ausgeführt, in die ein entsprechendes Teil der Konsole 14 bzw. der Sitzfläche 13 eingreift.

Die Konsole 14 weist außerdem ein Ablagefach 17 auf, in dem der Nutzer des Zweirads 1 verschiedene Gegenstände unterbringen kann und das gegebenenfalls mit einem nicht dargestellten Deckel verschließbar sein kann. Des Weiteren sind im vorliegenden Fall innerhalb der Konsole 14 Teile einer Antriebseinrichtung des Zweirads 1 angeordnet. Konkret kann es sich dabei um einen sehr schematisch angedeuteten Elektromotor 18, ein Getriebe 19 und/oder eine Batterie 20 handeln. Der Elektromotor 18, das Getriebe 19 und/oder die Batterie 20 können zusätzlich oder statt des oben beschriebenen, in dem Rad 3 angeordneten Elektromotors und der oben beschriebenen, in der Bodengruppe 11 angeordneten Batterie vorgesehen sein. Bei dem Getriebe 19 kann es sich beispielsweise um ein Automatikgetriebe handeln und dasselbe kann zum Beispiel als Riemengetriebe ausgeführt sein.

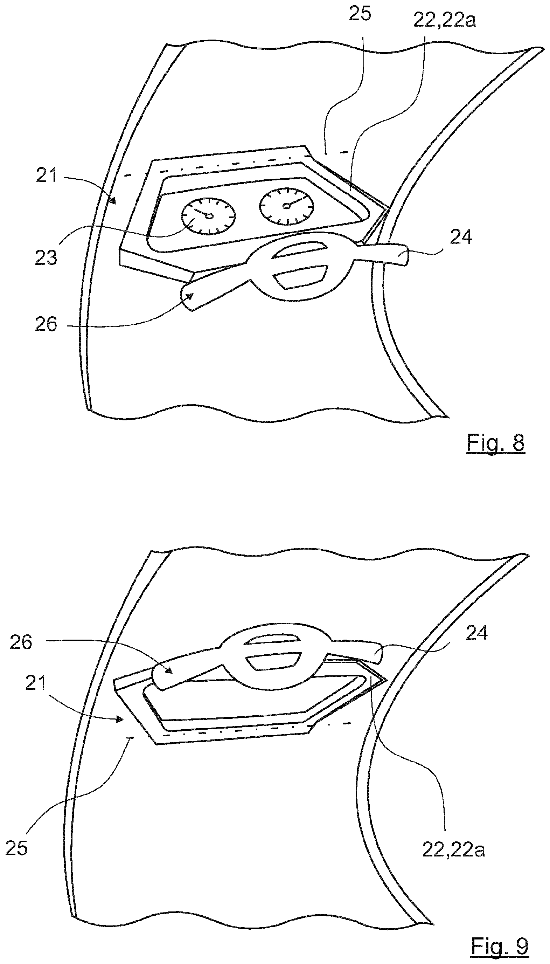

Die Figuren 8 und 9 zeigen ein Cockpit 21 des Zweirads 1. Das Cockpit 21 weist einen Grundkörper 22 auf, an dem eine Anzeige 23 und ein Lenker bzw. eine Lenkhandhabe 24 angebracht sind.

Um eine Anpassung des Cockpits an unterschiedliche Nutzer bzw. Fahrer des Zweirads 1 zu ermöglichen, ist der Grundkörper 22 drehbar an der Karosserie 2 des Zweirads 1 gelagert. Im vorliegenden Fall ist der Grundkörper 22 an einer wenigstens annähernd horizontal verlaufenden Drehachse 25 mit der Karosserie 2 verbunden. Die Drehachse 25 befindet sich dabei im Bereich des Windschutzscheibenrahmens 10.

Dabei kann vorgesehen sein, dass der Grundkörper 22 in wenigstens zwei, gegebenenfalls auch mehreren Positionen gegenüber der Karosserie 2 verriegelbar ist. Diese Verriegelbarkeit des Grundkörpers 22 gegenüber der Karosserie 2 kann mit einem nicht dargestellten Schnellspanner oder einer ähnlichen Einrichtung gewährleistet werden. Zusätzlich oder alternativ ist es auch möglich, den Grundkörper 22 in definierten Raststellungen gegenüber der Karosserie 2 anzuordnen.

Der Grundkörper 22 ist im vorliegenden Fall als Rahmen 22a ausgebildet, der die Anzeige 23 zumindest teilweise umgibt. Im dargestellten Ausführungsbeispiel ist der Rahmen 22a trapezförmig ausgeführt und umgibt die Anzeige 23 an allen vier Seiten.

Die Lenkhandhabe 24 bzw. der Lenker weist mehrere Bedienelemente 26 auf. Im vorliegenden Fall umfassen die Bedienelemente 26 einen Gasgriff, einen Bremshebel und eine Blinkerbetätigung. Selbstverständlich können noch weitere Bedienelemente 26, wie zum Beispiel ein Kupplungshebel, vorgesehen sein oder es können auch verschiedene Bedienelemente 26 weggelassen werden.

Die Verbindung von der Lenkhandhabe 24 zu dem gelenkten Rad 3 kann bei dieser Verstellung des Cockpits 21 ebenfalls verstellt werden. Des Weiteren kann diese Verbindung auch als sogenannte und an sich bekannte Drive-by-Wire-Lenkung ausgeführt sein, sodass zwischen der Lenkhandhabe 24 und dem vorderen Rad 3 keine mechanische Verbindung besteht.

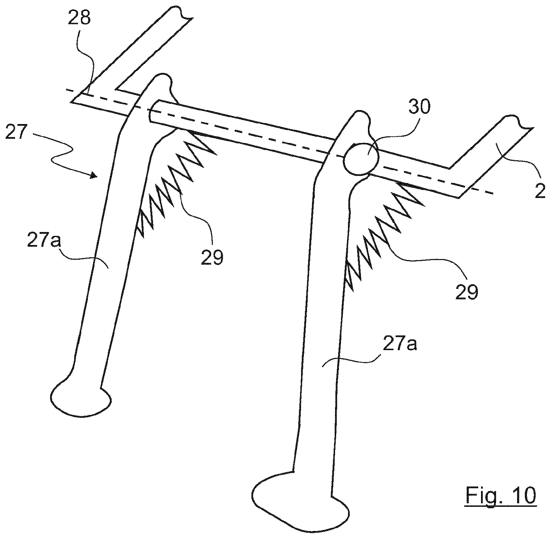

In Fig. 10 ist ein Ständer 27 dargestellt, mit dem das Zweirad 1 auf dem Boden abgestellt werden kann. Der Ständer 27 weist einen Ständerabschnitt 27a auf, der zwischen einer oberen Position und einer unteren Position an einer Drehachse 28 drehbar an der Karosserie 2 gelagert ist. In der unteren Position des Ständerabschnitts 27a bietet der Ständer 27 eine Abstützung der Karosserie 2 und somit des Zweirads 1 am Boden.

Des Weiteren weist der Ständer 27 ein Federelement 29 auf, das so ausgebildet ist, dass es den Ständerabschnitt 27a durch die Federkraft nach unten drückt. Zum Zurückstellen des Ständerabschnitts 27a in die obere Position dient im vorliegenden Fall eine als Elektromotor 30 ausgebildete Antriebseinrichtung, die in der Lage ist, eine Drehbewegung des Ständerabschnitts 27a um seine Drehachse 28 an der Karosserie 2 zu bewirken. Der Elektromotor 30 kann beispielsweise direkt an der Drehachse 28, an der der Ständer 27 an der Karosserie 2 drehbar gelagert ist, angeordnet sein.

Der Ständerabschnitt 27a kann dabei in eine derartige Position nach unten gefahren werden, dass die Räder 3 dennoch auf dem Boden aufliegen. Dadurch müsste das Federelement 29 nur so stark ausgelegt werden, dass es nicht notwendig wäre, mit demselben das gesamte Gewicht des Zweirads 1 anzuheben. Durch den Ständer 27 wird also in jedem Fall ein Umfallen des Zweirads 1 verhindert. An seinem unteren Ende kann der Ständerabschnitt 27a mit nicht dargestellten Rädern versehen sein, die ein Rangieren des Zweirads 1 auch bei heruntergeklapptem Ständer 27 ermöglichen.

Des Weiteren kann eine nicht dargestellte Verriegelungseinrichtung vorgesehen sein, mit welcher der Ständerabschnitt 27a in der oberen Position verriegelt werden kann, sodass es nicht notwendig ist, den Elektromotor 30 ständig zu betreiben, um den Ständerabschnitt 27a in der oberen Position zu halten. Im vorliegenden Fall ist der Ständerabschnitt 27a im Wesentlichen U-förmig ausgebildet. Es wäre jedoch auch möglich, zwei voneinander unabhängige Ständerabschnitte 27a vorzusehen oder lediglich einen Ständerabschnitt 27a, der dann statt in der Form eines Hauptständers in der Form eines Seitenständers ausgeführt wäre.

Sämtliche der oben beschriebenen Verriegelungen bzw. Verriegelungseinrichtungen der einzelnen Bauteile bzw. Elemente des Zweirads 1 können auf die unterschiedlichsten Arten realisiert werden, beispielsweise manuell, pneumatisch, hydraulisch oder elektrisch.

## Patentansprüche

1. Cockpit-Anordnung mit einem Cockpit (21) für ein Zweirad (1), mit einem Grundkörper (22), an dem eine Anzeige (23) und eine Lenkhandhabe (24) angebracht sind, wobei der Grundkörper (22) drehbar an einer Karosserie (2) des Zweirads (1) gelagert ist, wobei der Grundkörper (22) an einer wenigstens annähernd horizontal verlaufenden Drehachse (25) mit der Karosserie (2) verbunden ist, **dadurch gekennzeichnet, dass**
die Drehachse (25) einem Windschutzscheibenrahmen (10) zugeordnet ist.

2. Cockpit-Anordnung nach Anspruch 1, **dadurch gekennzeichnet, dass**
der Grundkörper (22) in wenigstens zwei Positionen gegenüber der Karosserie (2) verriegelbar ist.

3. Cockpit-Anordnung nach Anspruch 2, **dadurch gekennzeichnet, dass**
der Grundkörper (22) mittels eines Schnellspanners gegenüber der Karosserie (2) verriegelbar ist.

4. Cockpit-Anordnung nach einem der Ansprüche 1 bis 3, **dadurch gekennzeichnet, dass**
der Grundkörper (22) in definierten Raststellungen gegenüber der Karosserie (2) anordenbar ist.

5. Cockpit-Anordnung nach einem der Ansprüche 1 bis 4, **dadurch gekennzeichnet, dass**
der Grundkörper (22) als Rahmen (22a) ausgebildet ist, der die Anzeige (23) zumindest teilweise umgibt.

6. Cockpit-Anordnung nach einem der Ansprüche 1 bis 5, **dadurch gekennzeichnet, dass**
die Lenkhandhabe (24) mehrere Bedienelemente (26) aufweist.

7. Cockpit-Anordnung nach Anspruch 6, **dadurch gekennzeichnet, dass**
die Bedienelemente (26) einen Gasgriff, einen Bremshebel und/oder eine Blinkerbetätigung umfassen.

## Claims

1. Dashboard arrangement with a dashboard (21) for a two-wheeled vehicle (1), with a base body (22), on which a display (23) and a steering handle (24) are attached, wherein the base body (22) is mounted pivotably on a chassis (2) of the two-wheel vehicle (1), wherein the base body (22) is connected to the chassis (2) on an at least approximately horizontally running axis of rotation (25), **characterised in that** the axis of rotation (25) is assigned to a windscreen frame (10).

2. Dashboard arrangement according to claim 1, **characterised in that** the base body (22) can be locked in at least two positions relative to the chassis (2).

3. Dashboard arrangement according to claim 2, **characterised in that** the base body (22) can be locked to the chassis (2) by means of a quick release.

4. Dashboard arrangement according to any of claims 1 to 3, **characterised in that** the base body (22) can be arranged in defined latching positions relative to the chassis (2).

5. Dashboard arrangement according to any of claims 1 to 4, **characterised in that** the base body (22) is designed as a frame (22a) which at least partly surrounds the display (23).

6. Dashboard arrangement according to any of claims 1 to 5, **characterised in that** the steering handle (24) has a plurality of operating elements (26).

7. Dashboard arrangement according to claim 6, **characterised in that** the operating elements (26) comprise a throttle, a brake lever and/or an indicator.

## Revendications

1. Agencement d'habitacle avec un habitacle (21) pour un deux-roues (1), avec un corps de base (22) au niveau duquel un affichage (23) et une manette de direction (24) sont montés, dans lequel le corps de base (22) est logé de manière à pouvoir tourner au niveau d'une carrosserie (2) du deux-roues (1), dans lequel le corps de base (22) est raccordé au niveau d'un axe de rotation (25) s'étendant au moins approximativement horizontalement à la carrosserie (2), **caractérisé en ce que**
l'axe de rotation (25) est associé à un cadre de pare-brise (10).

2. Agencement d'habitacle selon la revendication 1,
**caractérisé en ce que**
le corps de base (22) peut être verrouillé dans au moins deux positions par rapport à la carrosserie (2).

3. Agencement d'habitacle selon la revendication 2,
**caractérisé en ce que**
le corps de base (22) peut être verrouillé au moyen d'un tendeur rapide par rapport à la carrosserie (2).

4. Agencement d'habitacle selon l'une quelconque des revendications 1 à 3,
**caractérisé en ce que**
le corps de base (22) peut être agencé dans des positions d'encliquetage définies par rapport à la carrosserie (2).

5. Agencement d'habitacle selon l'une quelconque des revendications 1 à 4,
**caractérisé en ce que**
le corps de base (22) est réalisé comme cadre (22a) qui entoure au moins partiellement l'affichage (23).

6. Agencement d'habitacle selon l'une quelconque des revendications 1 à 5,
**caractérisé en ce que**
la manette de direction (24) présente plusieurs éléments de commande (26).

7. Agencement d'habitacle selon la revendication 6,
**caractérisé en ce que**
les éléments de commande (26) comportent une manette des gaz, un levier de freinage et/ou un actionneur de clignotant.
